# EUROPÄISCHE PATENTSCHRIFT

(11) **EP 0 558 087 B1**
(45) Veröffentlichungstag und Bekanntmachung des Hinweises auf die Patenterteilung: **03.12.1997**
(21) Anmeldenummer: 93103155.3
(22) Anmeldetag: 26.02.1993
(51) Int. Cl.: A22B 5/08

(54) **Verfahren und Vorrichtung zur Reinigung einer Enthaarungsmaschine**
Method and means for cleaning a dehairing machine
Procédé et dispositif pour le nettoyage d'une machine de dépilage

(30) Priorität: 28.02.1992 DE 4206285
(43) Veröffentlichungstag der Anmeldung: 01.09.1993
(73) Patentinhaber: BANSS MASCHINENFABRIK GmbH & CO. KG, D-35216 Biedenkopf (DE)
(72) Erfinder: Weigel, Wilfried, W-3563 Dautphetal-Friedensdorf (DE)
(74) Vertreter: Klunker . Schmitt-Nilson . Hirsch

(56) Entgegenhaltungen:
- CA-A- 1 102 517
- DE-B- 1 283 697
- PIG INTERNATIONAL Bd. 20, Nr. 1, 1. Januar 1990, MOUNT MORRIS, ILL., USA. Seite 32 'PRODUCTS'
- ABATTOIR DEHAIRER
- STORK NIJHUIS B.V. '"TARZAN" DEHAIRING MACHINE' 1990 , STORK NIJHUIS B.V. , LICHTENVOORDE (HOLL.)
- OPTIMUM HYGIENE

## Beschreibung

Die Erfindung bezieht sich auf eine Vorrichtung zur Innenreinigung einer Schlachthof-Enthaarungsmaschine für Tierkörper oder Tierkörperteile, die einen Maschinenraum mit Begrenzungsflächen hat, wobei die Vorrichtung ein in der Enthaarungsmaschine installiertes Sprühaggregat aufweist, mit dem sich für die Innenreitugung der Enthaarungsmaschine eine Flüssigkeit gegen die Begrenzungsflächen des Maschinenraums sprühen läßt.

Die in der Schlachtlinie eines Schlachthofs bei der Verarbeitung von Schlachttieren eingesetzten Maschinen unterliegen einer starken Verschmutzung. Dies gilt insbesondere für sogenannte Enthaarungsmaschinen, die zur Enthaarung gebrühter Schweinekörper verwendet werden. Das entweder vor oder während des Enthaarungsvorgangs erfolgende Brühen der Schweinekörper führt zu einer Aufweichung der Haut, so daß die Borsten mit einer in der Enthaarungsmaschine angeordneten Enthaarungseinrichtung leichter entfernt werden können.

Um die Bildung und Vermehrung von Keimen in der Enthaarungsmaschine zu vermeiden, ist es notwendig, die Enthaarungsmaschinen zumindest nach Schlachtende sorgfältig von Haaren, Hautresten und etwaigen bei Eintritt in die Enthaarungsmaschine an den Schweinekörpern haftenden Verunreinigungen zu reinigen. Es sind Enthaarungsmaschinen bekannt, bei denen das Brühen mit einer im Innern der Maschine angeordneten Sprüheinrichtung während des Betriebs der Enthaarungsmaschine durch Besprühung der Schweinekörper mit Brühwasser erfolgt. Bei bereits vorgebrühten Schweinen können mittels des aus der Sprüheinrichtung austretenden Wassers die gelösten Borsten abgespült werden.

Aus den Dokumenten "Pig International, Bd. 20, Nr. 1, Januar 1990, Mount Morris (Ill., USA), Seite 32 "Products", Abattoir Dehairer" und "Stork Nijhuis B.V., Prospekt "Tarzan" Dehairing Machine" ist eine Vorrichtung mit den im Anfangsabsatz genannten Merkmalen bekannt. Bei der bekannten Enthaarungsmaschine wird während des Betriebs Wasser kontinuierlich innen gegen die Decke und die Seitenwände des Maschinenraums gesprüht, um diese sauber zu halten. In den genannten Dokumenten ist nicht beschrieben, daß dieses Sprühen für eine gründliche Gesamtreinigung der Enthaarungsmaschine einschließlich der Enthaarungseinrichtung ausreichend wäre.

Bei den Enthaarungsmaschinen sowohl des reinen Enthaarungstyps als auch des kombinierten Brüh- und Enthaarungstyps muß für eine sorgfältige Reinigung der Reinigungsvorgang von Arbeitskräften manuell ausgeführt werden. Hierzu sind normalerweise Wartungsöffnungen vorgesehen, durch die die Arbeitskräfte etwa mit Schläuchen in den Innenraum der Maschine vordringen können. Da insbesondere alle Bereiche der im Innenraum der Maschine angeordneten Enthaarungseinrichtung nur bei Umlauf derselben erreichbar sind, birgt die manuelle Reinigung ein hohes Unfallrisiko in sich. Mit der manuellen Reinigung der Enthaarungsmaschine ist für die Arbeitskräfte ein erheblicher Zeitaufwand verbunden, so daß sich die manuelle Reinigung darüber hinaus auch als sehr kostenaufwendig erweist.

Aufgabe der vorliegenden Erfindung ist es, eine Vorrichtung vorzuschlagen, mit der das Unfallrisiko beim Reinigen der Maschine minimiert und eine kostengünstige Durchführung der Reinigung ermöglicht wird.

Diese Aufgabe wird erfindungsgemäß dadurch gelöst, daß das Sprühaggregat während des Reinigungsvorgangs hinsichtlich seiner Position und/oder Ausrichtung bewegbar ist.

Die Erfindung sieht den Einsatz einer an der Maschine angeordneten, im Innenraum wirksamen Reinigungseinrichtung vor, die ein manuelles Reinigen und den damit verbundenen Einsatz von Arbeitskräften überflüssig macht. Hierdurch wird einerseits das mit der manuellen Reinigung verbundene Unfallrisiko für die Arbeitskräfte vermieden, zum anderen ist durch den Verzicht auf Arbeitskräfte bei der Reinigung eine Einsparung von Mannstunden im Schlachthofbetrieb möglich.

Vorzugsweise weist die Vorrichtung eine Steuereinrichtung auf, welche einen Ablauf der Innenreinigung mit mehreren Arbeitsgängen steuert. Ein Beispiel eines derartigen Reinigungsprogramms wird weiter unten genauer beschrieben. Die Steuereinrichtung kann als speicherprogrammierbare Steuerung realisiert sein, so daß trotz mehrerer Arbeitsgänge keine Bedienung durch eine Arbeitskraft erforderlich ist. Außerdem ist hierdurch eine besonders einfache Anpassung des Reinigungsprogramms an die Art und den Umfang der Verschmutzung möglich.

Die erfindungsgemäße Vorrichtung weist eine Reinigungseinrichtung mit einem bezüglich seiner Position und/oder Ausrichtung veränderbaren Sprühaggregat auf. Hierdurch ist es nicht mehr notwendig, daß, wie bislang üblich, eine Arbeitskraft etwa mit einem Schlauch in die verschiedenen Bereiche des Maschineninnenraums vordringt. Die in der Ausrichtung veränderbare, also bewegbare Ausführung des Sprühaggregats, das mit der Maschine verbunden ist, ermöglicht eine Reinigung aller Bereiche des Maschineninnenraums, ohne daß ein Schlauch oder dergleichen in den Maschineninnenraum eingebracht werden muß. Dies erweist sich als besonders vorteilhaft, da die Reinigung des Maschineninnenraums, insbesondere der Arbeitseinrichtung der Maschine selbst, bei umlaufender Arbeitseinrichtung vollzogen werden muß, um alle Bereiche der Arbeitseinrichtung zu erreichen, so daß das bei der bislang manuell durchgeführten Reinigung bestehende Unfallrisiko durch den Einsatz des an der Maschine installierten, bewegbaren Sprühaggregats vermieden wird.

Eine besonders einfach realisierbare Möglichkeit der bewegbaren Gestaltung des Sprühaggregats besteht darin, dieses mit einer Schwenkeinrichtung zu versehen. Diese konstruktive Gestaltung bietet zudem den Vorteil, daß die eigentliche Schwenkeinrichtung außerhalb des Maschineninnenraums angeordnet werden kann, wobei die Schwenkeinrichtung mit dem schwenkbaren Sprühaggregat etwa über ein Schwenkgestänge verbunden ist. Durch die außenliegende Anordnung der Schwenkeinrichtung wird nämlich auch der Einsatz feuchteempfindlicher Schwenkeinrichtungen, wie z.B. Elektromotoren, problemlos ermöglicht. Natürlich stellt eine Schwenkeinrichtung nur eine beispielhafte Lösung dar, um das Sprühaggregat zu bewegen. Günstig ist es jedoch, wenn die wie auch immer geartete Bewegungseinrichtung außerhalb und das Sprühaggregat innerhalb des Maschineninnenraums angeordnet ist, wobei das zur Bewegung des Sprühaggregats verwendete Bewegungs- oder Schwenkgestänge die Wandung des Maschinengehäuses durchdringen kann.

In einem bevorzugten Ausführungsbeispiel ist das Sprühaggregat als um seine Längsachse schwenkbares Spruhrohr ausgebildet, das mittels einer als Schwenkeinrichtung dienenden Kolben-/Zylinder-Einheit verschwenkbar ist. Durch eine Anordnung des Sprühaggregats oberhalb der im Maschineninnenraum angeordneten Arbeitseinrichtung läßt sich eine möglichst weitreichende Verteilung der durch das Sprühaggregat in den Maschineninnenraum eingebrachten Reinigungsmittel erreichen.

Zur Ergänzung des oberhalb der Arbeitseinrichtung angeordneten bewegbaren Sprühaggregats können zusätzlich Sprüheinrichtungen im Bereich der Arbeitseinrichtung, etwa seitlich oder oberhalb dieser, angeordnet sein. Die Sprüheinrichtungen können als Sprührohre, Kugeldrehköpfe oder dergleichen ausgeführt sein.

Als besonders vorteilhaft erweist es sich, wenn das Maschinengehäuse mit dem daran angeordneten bewegbaren Sprühaggregat oberhalb der Brühwasser-Aufnahmeeinrichtung angeordnet ist, um den Rücklauf der aus dem Sprühaggregat austretenden Reinigungsmittel in die Brühwasser-Aufnahmeeinrichtung möglichst einfach zu gestalten.

Zwischen dem Sprühaggregat und der Brühwasser-Aufnahmeeinrichtung kann eine Filtereinrichtung angeordnet sein, um vor Eintritt der Reinigungsmittel in die Brühwasser-Aufnahmeeinrichtung eine Filterung durchzuführen. Besonders günstig ist es, wenn die Filtereinrichtung unterhalb eines unterhalb des Maschinengehäuses angeordneten Borstenförderers, der zum Abtransport der in der Enthaarungsmaschine von den Schweinekörpern abgelösten Borsten dient, angeordnet ist. Hierdurch läßt sich der zur Brühwasser-Aufnahmeeinrichtung hin wasserdurchlässige Borstenförderer quasi als Vorfilter nutzen.

Die Brühwasser-Aufnahmeeinrichtung der Reinigungsvorrichtung ist bei einer vorteilhaften Ausbildung der Erfindung mit einem Behälter zur Aufnahme eines Reinigungskonzentrats (Konzentratbehälter) verbunden, so daß die Brühwasser-Aufnahmeeinrichtung unter Zugabe von Wasser und dem Reinigungskonzentrat als Behälter zum Anmischen einer Reinigungslösung dienen kann.

Der Konzentratbehälter kann neben der Verbindung zum Brühwassertank eine weitere Verbindung zum Sprühaggregat aufweisen, so daß auch die Möglichkeit besteht, etwa bei einem besonders starken Verschmutzungsgrad des Maschineninnenraums, das Reinigungskonzentrat aus dem Konzentratbehälter direkt, also unverdünnt, durch das Sprühaggregat in den Maschineninnenraum einzugeben.

Je nach Wahl der verwendeten Reinigungsmittel läßt sich eine Verbesserung der Reinigungswirkung erzielen, indem die Brühwasser-Aufnahmeeinrichtung bzw. der Konzentratbehälter mit einer Beheizungseinrichtung versehen werden. Diese kann beispielsweise als eine Wärmetauschereinrichtung ausgebildet sein, bei der etwa eine Heißwasser zur Beheizung des Schlachthofs führende Leitung durch die Brühwasseraufnahmeeinrichtung bzw. den Konzentratbehälter geführt wird.

Nachfolgend wird die Erfindung anhand der Zeichnungen von Ausführungsbeispielen näher erläutert. Es zeigen:
- **Fig. 1**: eine mit der erfindungsgemäßen Reinigungsvorrichtung versehene Enthaarungsmaschine mit einem als Brühwasser-Aufnahmeeinrichtung dienenden Brühwassertank;
- **Fig. 2**: eine mit der erfindungsgemäßen Reinigungsvorrichtung versehene Enthaarungsmaschine mit einer als Brühwasser-Aufnahmeeinrichtung dienenden Auffangwanne;
- **Fig. 3**: eine erste Ausführungsform eines bewegbaren Sprühaggregats;
- **Fig. 4**: eine zweite Ausführungsform eines bewegbaren Sprühaggregats in einer Frontansicht;
- **Fig. 5**: die Ausführungsform gemäß **Fig. 4** in Seitenansicht;
- **Fig. 6**: eine dritte Ausführungsform eines bewegbaren Sprühaggregats;
- **Fig. 7**: ein Flußdiagramm zur Erläuterung einer Reinigung mit mehreren Arbeitsgängen.

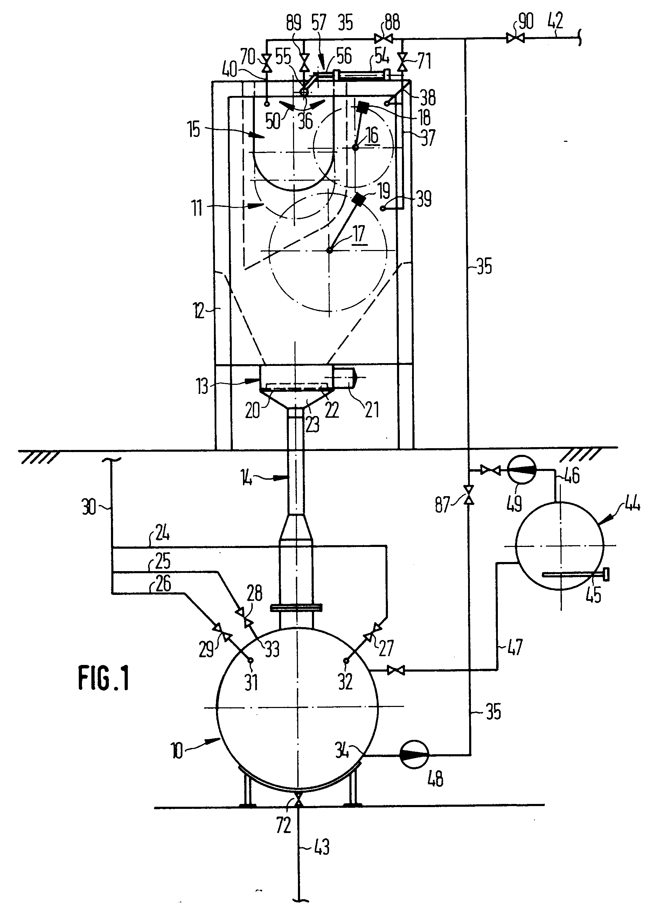

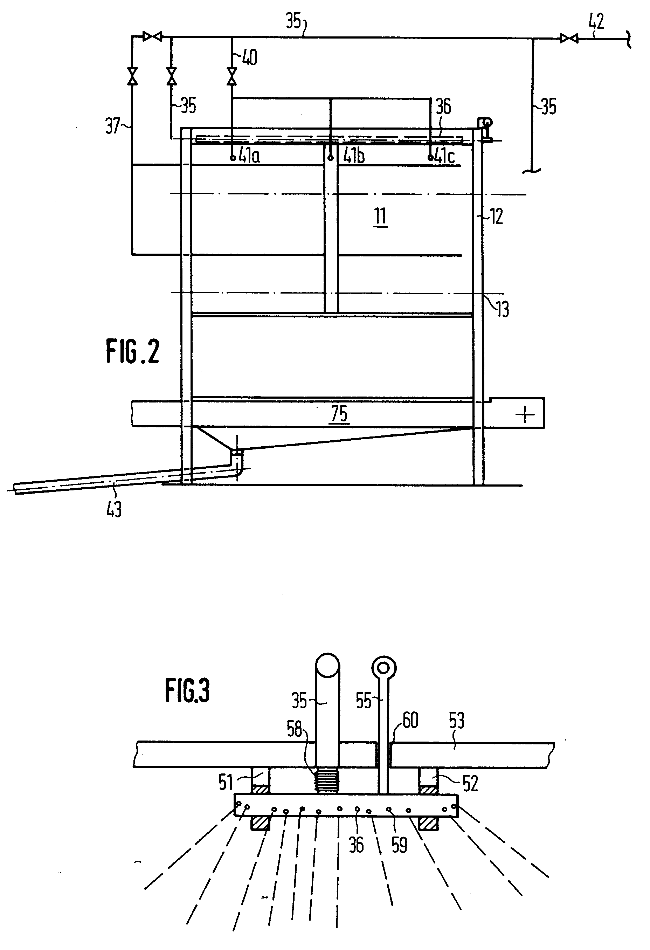

**Fig. 1** zeigt in einer Querschnittsdarstellung eine Anordnung aus einem Brühwassertank 10 und einer Enthaarungsmaschine 11. Die Enthaarungsmaschine 11 ist in einer Ständerkonstruktion 12 oberhalb des Brühwassertanks 10 angeordnet und unterhalb eines zur Enthaarungsmaschine 11 gehörigen Borstenförderers 13 über ein Ablaufrohr 14 mit dem Brühwassertank 10 verbunden. Bei dem in **Fig. 1** dargestellten Ausführungsbeispiel ist der Brühwassertank 10 unter Flur angeordnet. Natürlich ist es auch möglich, den Brühwassertank 10 über Flur anzuordnen und die Enthaarungsmaschine 11 mittels der ständerkonstruktion 12 aufzuständern. Bei der über-Flur-Anordnung kann statt des Brühwassertanks 10 auch eine Auffangwanne 75 vorgesehen werden, die entsprechend der Darstellung in **Fig. 2** unterhalb des Borstenförderers 13 angeordnet ist.

Die Enthaarungsmaschine 11 weist eine Gehäusewandung 53 auf, die aus einer mit der Ständerkonstruktion 12 verbundenen Blechverkleidung gebildet sein kann. Innerhalb der Gehäusewandung 53 ist eine mit der Ständerkonstruktion 12 verbundene Aufnahme-/Fördereinrichtung 15 zur Aufnahme und zum Transport von durch die Enthaarungsmaschine 11 transportierten Schweinekörpern vorgesehen. Seitlich bzw. unterhalb der Aufnahme-/Fördereinrichtung 15 sind Schlägerwalzen 16 und 17 vorgesehen. Die Aufnahme-/Fördereinrichtung 15 ist aus hier nicht im einzelnen dargestellten, im wesentlichen U-förmig ausgebildeten Tragsegmenten zusammengesetzt, die in Längsrichtung der Enthaarungsmaschine 11, also senkrecht zur Zeichenebene, durch Zwischenräume voneinander beabstandet angeordnet sind. Diese Zwischenräume ermöglichen bei Rotation der Schlägerwalzen 16, 17 ein teilweises Eindringen einer Vielzahl von in Längsrichtung der Schlägerwalzen 16, 17 auf diesen angeordneten Walzenschlägern 18, 19.

Zur Enthaarung wird ein Schweinekörper über eine hier nicht dargestellte Einwurfrutsche in die Aufnahme-/Fördereinrichtung 15 befördert und durch Kontakt mit den rotierenden Walzenschlägern 18, 19 sowohl in Drehung versetzt als auch enthaart. Durch eine hier nicht näher dargestellte teilweise Schrägstellung der Tragsegmente der Aufnahme-/Fördereinrichtung 15 wird erreicht, daß sich die Schweinekörper bei der durch die Walzenschläger 18, 19 bewirkten Rotation in Richtung der Maschinenlängsachse fortbewegen. Hierdurch kann eine Vielzahl von Walzenschlägern 18, 19 mit dem Schweinekörper in Berührung kommen und so eine möglichst weitgehende Enthaarung des Schweinekörpers erreicht werden.

Die bei Berührung mit den Walzenschlägern 18, 19 vom Schweinekörper entfernten Borsten werden durch das Brühwasser auf den unterhalb der Schlägerwalzen 16, 17 angeordneten Borstenförderer 13 gespült. Dieser ist mit einem gelochten Förderblech 20 versehen, auf dem, angetrieben durch einen Elektromotor 21, stabförmig ausgebildete Mitnehmer 22 entlangstreichen, um die auf das Förderblech 20 gefallenen Borsten abzutransportieren. Unterhalb des Borstenförderers 13 ist bei dem Ausführungsbeispiel gemäß **Fig. 1** ein als Trichter 23 ausgebildeter Gehäuseteil vorgesehen, der über das Ablaufrohr 14 mit dem Brühwassertank 10 verbunden ist. Bei dem Ausführungsbeispiel gemäß **Fig. 2** gelangt das Brühwasser direkt vom Borstenförderer 13 in die Auffangwanne 75.

Sowohl beim Ausführungsbeispiel gemäß **Fig. 1** als auch beim Ausführungsbeispiel gemäß **Fig. 2** kann vor dem Rücklauf der Reinigungsflüssigkeit in den Brühwassertank 10 bzw. die Auffangwanne 75 eine hier nicht im einzelnen dargestellte Filtereinrichtung vorgesehen werden, die für eine Feinfilterung der Reinigungsflüssigkeit sorgt, nachdem grobe Verunreinigungen, wie etwa die Borsten, zuvor durch das gelochte Förderblech 20 des Borstenförderers 13 zurückgehalten worden sind.

Wie in **Fig. 1** dargestellt, führt eine Wasserleitung 30, die in drei Wasserzuläufe 24, 25, 26 aufgeteilt ist, zum Brühwassertank 10. Die Wasserzuläufe 24, 25, 26 sind jeweils mit einem Absperrventil 27, 28, 29 versehen. Die Wasserläufe 24, 26 münden innerhalb des Brühwassertanks 10 in Kugeldrehköpfe 31, 32, wie sie üblicherweise zur Faßreinigung eingesetzt werden. Der Wasserzulauf 25 mündet direkt in eine Zulauföffnung 33 des Brühwassertanks 10. Im unteren Bereich des Brühwassertanks 10 befindet sich eine Ablauföffnung 34, von der eine Zuleitung 35 zu einem oberhalb der Aufnahme-/Fördereinrichtung 15 im Innenraum der Maschine angeordneten, bewegbaren Sprührohr 36 führt. Von der Zuleitung 35 geht eine Zuleitung 37 ab, die zu jeweils einem im Bereich der Schlägerwalzen 16, 17 angeordneten Sprührohr 38, 39 führt.

Weiterhin geht von der Zuleitung 35 eine Zuleitung 40 ab, die zu einer ebenfalls oberhalb der Aufnahme-/Fördereinrichtung 15 angeordneten Kugeldrehkopfanordnung 41 geleitet ist. Mit der Zuleitung 35 ist darüber hinaus eine Zuleitung 42 verbunden. Am Boden des Brühwassertanks 10 ist eine Abflußleitung 43 zur Entleerung des Brühwassertanks 10 vorgesehen.

Darüber hinaus weist die Anordnung gemäß **Fig. 1** einen Konzentratbehälter 44 auf, der mit einer Heizeinrichtung 45 versehen ist und über eine Zuleitung 46 mit der Zuleitung 35 sowie einer Zuleitung 47 mit dem Brühwassertank 10 verbunden ist. Zur Überwindung der Förderhöhe zwischen der Ablauföffnung 34 des Brühwassertanks 10 und den Sprührohren 36, 38, 39 bzw. der Kugeldrehkopfanordnung 41 einerseits und dem Konzentratbehälter 44 und den vorstehend genannten Sprührohren 36, 38, 39 bzw. der Kugeldrehkopfanordnung 41 andererseits sind in den entsprechenden Zuleitungen Förderpumpen 48, 49 installiert.

**Fig. 2** zeigt die mehrere Kugeldrehköpfe 41a, 41b, 41c aufweisende Kugeldrehkopfanordnung 41 in einer Seitenansicht. Im übrigen bezeichnen mit **Fig. 1** übereinstimmende Bezugszeichen die bereits aus **Fig. 1** bekannten Teile.

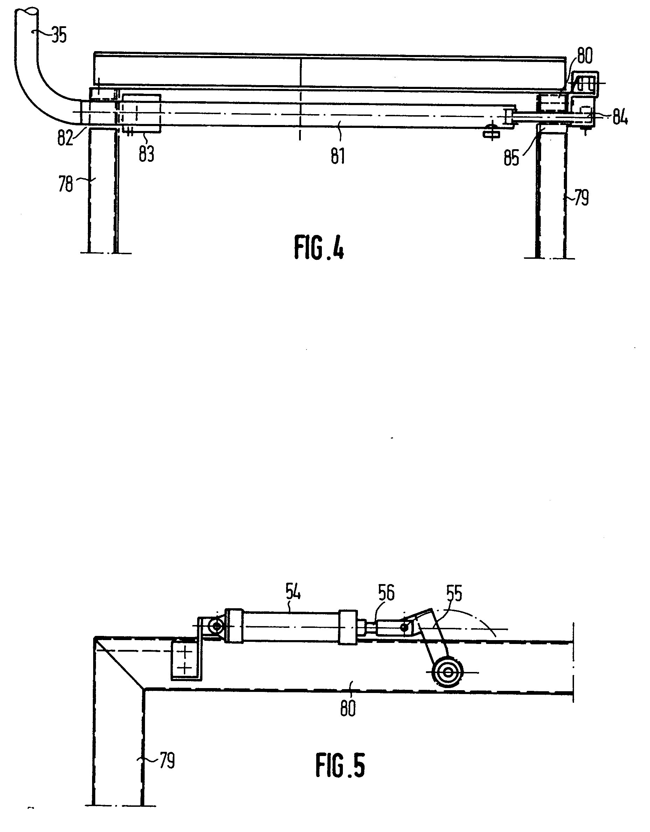

**Fig. 3** zeigt in einer vergrößerten Ausschnittsdarstellung eine mögliche Ausführungsform eines, wie durch den Pfeil 50 in **Fig. 1** angedeutet, schwenkbaren, als Sprührohr 36 ausgebildeten Sprühaggregats. Das Sprührohr 36 ist über ringförmige Aufnahmen 51, 52, die eine Rotation des Sprührohrs 36 um seine Längsachse ermöglichen, mit der Gehäusewandung 53 der Enthaarungsmaschine 11 verbunden. Zur schwenkbaren Anlenkung an einen in **Fig. 1** dargestellten, von außen auf der Gehäusewandung 53 angeordneten Schwenkzylinder 54 weist das Sprührohr 36 einen mit diesem verbundenen Schwenkhebel 55 auf. Der Schwenkhebel 55 ist an eine, in **Fig. 1** dargestellte Kolbenstange 56 angelenkt und bildet mit dieser ein Schwenkgestänge 57.

Wie **Fig. 3** zeigt, ist die Zuleitung 35 im Bereich des Sprührohrs 36 in die Gehäusewandung 53 eingeführt und weist einen flexiblen Verbindungsteil 58 auf, der auch bei Rotation des Sprührohrs 36 eine sichere, dichte Verbindung zwischen der an sich starren Zuleitung 35 und dem Sprührohr 36 ermöglicht. Zur Erzielung einer möglichst weitreichenden Verteilung einer aus dem Sprührohr 36 austretenden Flüssigkeit ist dieses mit einer Vielzahl von Düsenöffnungen 59 versehen. Zur Durchführung des Schwenkhebels 55 weist die Gehäusewandung 53 eine längsschlitzartig ausgebildete Öffnung 60 auf. Bei Bedarf kann zwischen der Öffnung 60 und der Schwenkstange 55 eine Manschettendichtung vorgesehen werden, um das Austreten von Flüssigkeit aus dem Innenraum der Maschine nach außen zu verhindern.

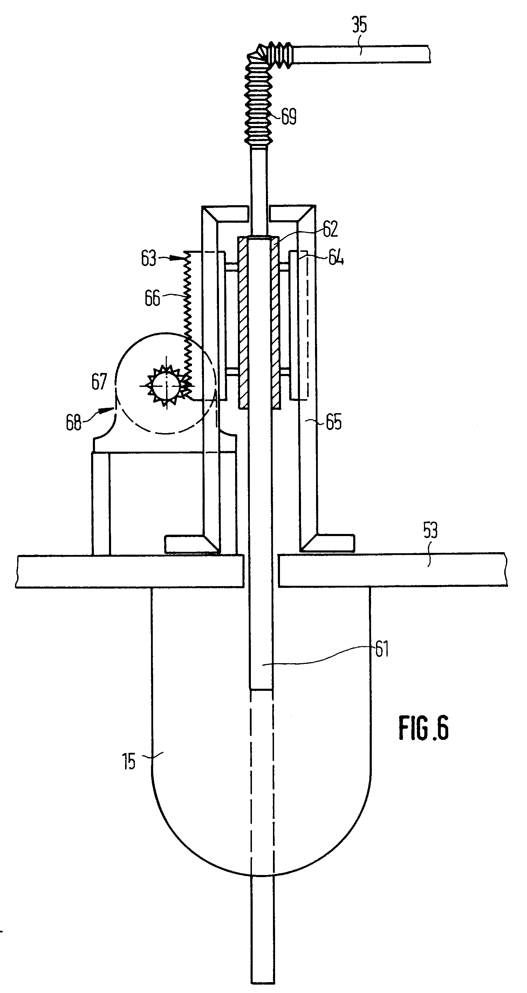

In den **Fig. 4** und **5** ist als weitere mögliche Ausführungsform eine Sprüheinrichtung dargestellt, die unmittelbar an Trägern 78, 79 und 80 der Ständerkonstruktion 12 installiert ist. Zur Aufnahme eines Sprührohrs 81 zwischen den Trägern 78 und 79 ist an dem Träger 78 ein den Träger quer durchdringender Rohrstutzen 82 vorgesehen, an dessen zwischen den Trägern 78 und 79 liegendem Ende eine Drehaufnahme 83 aus Kunststoff angeordnet ist, die fest mit dem Ende des Rohrstutzens 82 verbunden ist. Die Drehaufnahme 83 dient zur drehbaren Aufnahme eines Endes des Sprührohrs 81. Das andere Ende des Sprührohrs 81 ist mit einem Drehzapfen 84 versehen, der durch den Träger 79 hindurchgeführt ist und in einer quer im Träger 79 ausgebildeten Gleitlagerung 85 aufgenommen ist. Zum Hin- und Herschwenken des Sprührohrs 81 in der Drehaufnahme 83 bzw. der Gleitlagerung 85 ist am Drehzapfen 84 ein Schwenkhebel 86 angeordnet, der mit einer Kolbenstange 56 eines Schwenkzylinders 54 verbunden ist. Der Schwenkzylinder 54 ist zur Abstützung an den Träger 80 angelenkt.

Die Drehaufnahme 83, die mit einem Ende des Rohrstutzens 82 fest verbunden ist, dient zum einen als mechanische Lagerung zur Abstützung des eingeführten Endes des Sprührohrs 81. Zum anderen dient die Drehaufnahme 83 zur flüssigkeitsdichten Verbindung zwischen dem feststehenden Rohrstutzen 82 und dem gegenüber diesem bewegbaren Sprührohr 81. Die Zufuhr von Reinigungsflüssigkeit zum Sprührohr 81 erfolgt über die Zuleitung 35, die wegen der Verbindung mit dem feststehenden Rohrstutzen 82 starr ausgeführt und mit diesem verschweißt sein kann.

Das in den **Fig. 4** und **5** dargestellte Sprührohr 81 ist wie das in **Fig. 3** dargestellte Sprührohr 36 in Längsrichtung der Enthaarungsmaschine 11 angeordnet. Aus Gründen der Übersichtlichkeit sind in den **Fig. 4** und **5** lediglich Teilbereiche der das Sprührohr 81 aufnehmenden Ständerkonstruktion 12 unter Weglassung der Gehäusewandung 53 sowie den sonstigen im Bereich der Sprüheinrichtung 77 angeordneten Maschinenteile dargestellt.

Entsprechend dem Ausführungsbeispiel gemäß **Fig. 3** ist das Sprührohr 81 mit einer Vielzahl von im einzelnen nicht dargestellten Düsenöffnungen versehen, um eine gute Verteilung von durch das Sprührohr in den Maschineninnenraum eingebrachter Reinigungsflüssigkeit zu erreichen. Darüber hinaus ist das Sprührohr 81 mit einer verschließbaren Wartungsöffnung 86 versehen, um das Entfernen von etwaigen Borsten und anderen Verunreinigungen, die über den Reinigungskreislauf durch die Zuleitung 35 in das Sprührohr 81 gelangt sein könnten, zu ermöglichen. Natürlich ist es auch möglich, eine entsprechende Wartungsöffnung bei dem Sprührohr 36 gemäß **Fig. 3** vorzusehen.

**Fig. 6** zeigt als weiteres Ausführungsbeispiel eines in seiner Ausrichtung veränderbaren Sprühaggregats ein Sprührohr 61, das in Richtung seiner Längsachse verschiebbar ist und von oben her in den Maschineninnenraum einbringbar ist. Hierzu ist das Sprührohr 61 in eine Aufnahme 62 eingesetzt, die über Führungsteile 63, 64 in einer Schlittenführung 65 längsverschiebbar geführt ist. Das Führungsteil 63 ist an seinem Längsrand mit einer Verzahnung 66 versehen, in die ein Ritzel 67 eines Antriebsmotors 68 eingreift. Sowohl der Antriebsmotor 68 als auch die Schlittenführung 65 sind von außen mit der Gehäusewandung 53 verbunden.

Das Sprührohr 61 ist an seinem in der Aufnahme 62 aufgenommenen Ende mittels eines flexiblen Verbindungsstücks 69 mit der an sich starren Zuleitung 35 verbunden. Hierdurch wird ein Einfahren, wie durch den gestrichelten Linienverlauf in **Fig. 6** angedeutet, des Sprührohrs 61 bei einer Drehung im Uhrzeigersinn des Ritzels 67 in den Innenraum der Maschine bzw. den Innenbereich der Aufnahme-/Fördereinrichtung 15 und darüber hinaus ermöglicht. Bei gleichzeitiger Betrachtung der **Fig. 1** und **3** wird ersichtlich, daß bei einer ausreichend langen Ausführung des Sprührohrs 61 eine bis zum Borstenförderer 13 hin reichende unmittelbare Beaufschlagung der Innenwandung des Maschinengehäuses mit Reinigungsmittel möglich ist.

Natürlich ist es auch möglich, die Verschiebbarkeit des Sprührohrs 61 über von der in **Fig. 6** dargestellten Konstruktion abweichende Konstruktionen zu ermöglichen. Beispielsweise kann die Verschiebung des Sprührohrs 61 auch über eine in Längsrichtung des Sprührohrs 61 angeordnete Kolben-/Zylinder-Einheit erfolgen. Um den durch das Sprührohr 61 erzielbaren Reinigungseffekt noch weiter zu steigern, ist es möglich, mehrere in ihrer Längsrichtung verschiebbare Sprührohre 61 in Längsrichtung der Enthaarungsmaschine 11 hintereinanderliegend anzuordnen, oder bei Anordnung lediglich eines Sprührohrs 61, dieses in Längsrichtung der Enthaarungsmaschine 11 verschiebbar anzuordnen. Dies kann beispielsweise dadurch realisiert werden, daß die Schlittenführung 65 ihrerseits wieder in einer horizontal verschiebbaren Schlittenführung aufgenommen ist.

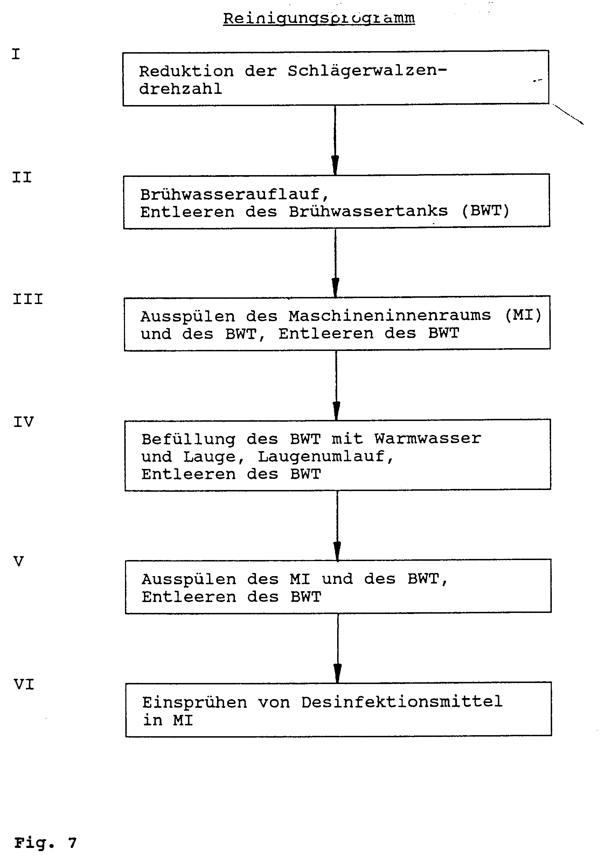

Eine Reinigung des Maschineninnenraums in meheren Arbeitsgängen soll im folgenden anhand der **Fig. 1** und **7** erläutert werden.

Bei einem beispielhaften Aufbau eines Reinigungsprogramms werden die in **Fig. 7** mit den römischen Ziffern I bis VI bezeichneten Stufen durchlaufen. Die Steuerung des Reinigungsprogramms erfolgt dabei über eine hier nicht näher dargestellte, da an sich hinlänglich bekannte Steuerungseinrichtung in Form einer speicherprogrammierbaren Steuerung (SPS). Da eine umfassende Reinigung der durch die Schlägerwalzen 16, 17 gebildeten Arbeitseinrichtung nur bei Rotation derselben möglich ist, werden auch während des Ablaufs des Reinigungsprogramms die Schlägerwalzen 16, 17 angetrieben, allerdings mit verminderter Drehzahl und gegebenenfalls mit geänderter Drehrichtung. Dies geschieht, um einerseits - wie bereits gesagteine umfassende Reinigung der Arbeitseinrichtung zu ermöglichen, andererseits einen unnötig hohen Energieverbrauch beim Betrieb derselben zu vermeiden.

Nach der in Phase I erfolgten Reduktion der Schlägerwalzendrehzahl erfolgt in Phase II ein Umlauf des im Brühwassertank 10 vom vorherigen Brühen der Schweinekörper, entweder in einer getrennten Brühvorrichtung oder in der als kombinierte Brüh- und Enthaarungsvorrichtung ausgebildeten Enthaarungsmaschine, gespeicherten Wassers. Das Brühwasser wird hierzu bei Offenstellung von Absperrventilen 87, 88, 89 mittels der Förderpumpe 48 zum schwenkbaren Sprührohr 36 gepumpt, aus dem es in den Innenraum der Maschine bei gleichzeitigem Verschwenken des Sprührohrs 36 durch den Schwenkzylinder 54 gesprüht wird. Wenn sich ein in der Zuleitung 40 angeordnetes Absperrventil 70 sowie in der Zuleitung 37 angeordnetes Absperrventil 71 in der Offenstellung befindet, erfolgt gleichzeitig auch ein Besprühen des Innenraums mit Brühwasser aus der Kugeldrehkopfanordnung 41 sowie aus den seitlich oberhalb der Schlägerwalzen 16, 17 angeordneten, in diesem Ausführungsbeispiel nicht schwenkbaren, also starren Sprührohren 38, 39. Die Sprührohre 38, 39 können natürlich bei Bedarf ebenfalls in ähnlicher Weise wie das Sprührohr 36 bewegbar bzw. schwenkbar ausgebildet sein. Nach einem durch die speicherprogrammierbare Steuerung vorgegebenen Zeitablauf wird die Förderung durch die Förderpumpe 48 beendet und das in den Brühwassertank 10 zurücklaufende Brühwasser durch Öffnung eines Absperrventils 72 in der Ablaufleitung 43 abgelassen.

Hieran anschließend erfolgt in Phase III des Reinigungsprogramms das Ausspülen des Maschineninnenraums und des Brühwassertanks 10 durch Einsprühen von klarem Wasser mittels der Kugeldrehköpfe 41 bzw. 31 und 32. Hierzu werden die Absperrventile 27, 29 in den Zuleitungen 24, 26 geöffnet und das in den Brühwassertank 10 bei geschlossenem Absperrventil 72 eindringende Wasser wird mittels der Förderpumpe 48 über die Zuleitungen 35, 40 der Kugeldrehkopfanordnung 41 zugeführt. Bei Offenstellung eines Absperrventils 89 sowie des Absperrventils 71 kann darüber hinaus eine Besprühung des Maschineninnenraums mittels der Sprührohre 36, 38, 39 erfolgen. Anschließend wird durch Beendigung der Förderung durch die Förderpumpe 48 sowie Öffnung des Absperrventils 72 die Phase III beendet und der Brühwassertank 10 entleert.

In der nun folgenden Phase IV erfolgt die Befüllung des Brühwassertanks 10 über den Wasseranschluß 30 mit Warmwasser und über die Zuleitung 47 mit einem im Konzentratbehälter 44 aufgenommenen Reinigungskonzentrat, etwa in Form einer starken Lauge. Hierdurch wird im Brühwassertank 10 eine Reinigungslösung gebildet, die gefördert durch die Förderpumpe 48 in Umlauf gebracht wird. Bei entsprechender Stellung der Absperrventile 70, 71, 89 läßt sich dabei eine Besprühung des Maschineninnenraums über sämtliche im Innenraum angeordnete Sprühaggregate und Sprüheinrichtungen erzielen. Das Mischungsverhältnis der im Brühwassertank 10 gebildeten Reinigungslösung läßt sich über im Wasseranschluß 30 und in der Zuleitung 47 angeordnete, hier nicht näher dargestellte Volumenregelventile beliebig einstellen. Als Indikator für das richtige Mischungsverhältnis kann hierbei der im Brühwassertank 10 gemessene pH-Wert herangezogen werden. Genausogut ist es möglich, über eine bei diesem Ausführungsbeispiel im Konzentratbehälter 44 angeordnete Heizungseinrichtung 45 und einen hiermit verbundenen Regelthermostat die gewünschte Temperatur der Reinigungslösung, die etwa durch einen Temperaturfühler im Brühwassertank überwacht wird, einzustellen. Nach Ablauf einer vorgegebenen Zeitspanne zum Umlauf der Reinigungslösung erfolgt dann wieder das obenstehend beschriebene Entleeren des Brühwassertanks 10.

In der Phase V des Reinigungsprogramms erfolgt dann eine Wiederholung des bereits obenbeschriebenen Ausspülvorgangs mit anschließendem Entleeren des Brühwassertanks 10, so daß dieser wieder mit Brühwasser befüllt werden kann.

In der das Reinigungsprogramm abschließenden Phase VI wird, eingeleitet durch die Zuleitung 42, in Abhängigkeit von der Stellung der Absperrventile 70, 71, 89 Desinfektionsmittel durch eine oder mehrere der durch die Kugeldrehkopfanordnung 41 sowie die Sprührohre 36, 38, 39 gebildeten Sprüheinrichtungen in den Maschineninnenraum eingesprüht. Die Einsprühung von Desinfektionsmittel in den Maschineninnenraum kann auch über besonders hierzu vorgesehene Düsen, etwa sogenannte "Feinsprühdüsen", erfolgen, um eine besonders feine Verteilung des Desinfektionsmittels bei gleichzeitig möglichst geringem Verbrauch desselben zu ermöglichen. Diese Düsen können zusätzlich zu den bereits beschriebenen, im Maschineninnenraum wirkenden Sprüheinrichtungen vorgesehen werden.

An dieser Stelle soll auch angemerkt werden, daß die Zuleitung 42 natürlich auch zum unmittelbaren Anschluß an das Wassernetz benutzt werden kann. Hierdurch werden entsprechende Variationen des beschriebenen Reinigungsprogramms ermöglicht. Außerdem ermöglicht die Benutzung der Zuleitung 42 als Frischwasserzuführung den Verzicht auf eine Frischwasserzuführung durch die Zuleitung 30 gemäß dem Ausführungsbeispiel in **Fig. 1.** Dies bietet sich besonders an, wenn die mit der erfindungsgemäßen Sprüheinrichtung versehene Enthaarungsmaschine 11 mit einer Auffangwanne 75 entsprechend dem in **Fig. 2** dargestellten Ausführungsbeispiel versehen ist. Natürlich sind abweichend von dem geschilderten beispielhaften Reinigungsprogramm beliebige Kombinationen der einzelnen Reinigungsgänge möglich, um das Reinigungsprogramm individuell den gegebenen Verschmutzungsbedingungen anzupassen.

## Patentansprüche

1. Vorrichtung zur Innenreinigung einer Schlachthof-Enthaarungsmaschine (11) für Tierkörper oder Tierkörperteile, die einen Maschineninnenraum mit Begrenzungsflächen hat, wobei die Vorrichtung ein in der Enthaarungsmaschine installiertes Sprühaggregat (36; 81) aufweist, mit dem sich für die Innerreinigung der Enthaarungsmaschine (11) eine Flüssigkeit gegen die Begrenzungsflächen des Maschinenraums sprühen läßt,
**dadurch gekennzeichnet,**
daß das Sprühaggregat (36; 81) während des Reinigungsvorgangs hinsichtlich seiner Position und/oder Ausrichtung bewegbar ist.

2. Vorrichtung nach Anspruch 1,
**dadurch gekennzeichnet,**
daß das Sprühaggregat als um seine Längsachse schwenkbares Sprührohr (36; 81) ausgebildet ist.

3. Vorrichtung nach Anspruch 1 oder 2,
**dadurch gekennzeichnet,**
daß das Sprühaggregat (36; 81) durch einen Antrieb bewegbar ist, der vorzugsweise außerhalb des Maschineninnenraums angeordnet ist.

4. Vorrichtung nach einem der Ansprüche 1 bis 3,
**dadurch gekennzeichnet,**
daß das Sprühaggregat (36; 81) oben im Maschineninnenraum angeordnet ist.

5. Vorrichtung nach einem der Ansprüche 1 bis 4,
**gekennzeichnet durch**
mindestens eine zusätzliche Sprüheinrichtung, vorzugsweise mindestens einen Kugeldrehkopf (41) und/oder mindestens ein Sprührohr (38; 39).

6. Vorrichtung nach einem der Ansprüche 1 bis 5,
**gekennzeichnet durch**
eine Steuereinrichtung, welche einen Ablauf der Innenreinigung mit mehreren Arbeitsgängen steuert.

## Claims

1. An apparatus for cleaning the interior of a slaughterhouse dehairing machine (11) for animal bodies or parts thereof which has a machine interior space with confining areas, said apparatus comprising a spraying unit (36; 81) installed in said dehairing machine and adapted to spray a liquid suitable for cleaning the interior of the dehairing machine (11) against said confining areas of the machine space,
characterized in that said spraying unit (36; 81) is movable during the cleaning operation with respect to its position and/or orientation.

2. The apparatus of claim 1,
characterized in that said spraying unit is designed as a spray tube (36; 81) that is pivotable about its longitudinal axis.

3. The apparatus of claim 1 or 2,
characterized in that said spraying unit (36; 81) is movable by a drive system disposed preferably outside of the machine interior space.

4. The apparatus of any of claims 1 to 3,
characterized in that said spraying unit (36; 81) is disposed in the machine interior space, at the top thereof.

5. The apparatus of any of claims 1 to 4,
characterized by at least one additional spraying means, preferably at least one rotary ball head (41) and/or at least one spray tube (38; 39).

6. The apparatus of any of claims 1 to 5,
characterized by a control means controlling a sequence of the interior cleaning operation having several operating steps.

## Revendications

1. Dispositif de nettoyage intérieur d'une machine à ébourrer d'abattoir (11) pour des corps d'animaux et des parties de corps d'animaux, machine comportant un espace intérieur ayant des surfaces de délimitation, le dispositif présentant un groupe de pulvérisation (36; 81) installées dans la machine à ébourrer, groupe à l'aide duquel un liquide est pulvérisé contre les surfaces de délimitation de l'espace machine pour effectuer le nettoyage intérieur de la machine à ébourrer (11), caractérisé en ce que le groupe de pulvérisations (36; 81) est déplaçable pendant le processus de nettoyage, en ce qui concerne sa position et/ou son orientation.

2. Dispositif selon la revendication 1, caractérisé en ce que le groupe de pulvérisation est réalisé sous forme d'un tube de pulvérisation (36; 81) pivotant autour de son axe longitudinal.

3. Dispositif selon la revendication 1 ou 2, caractérisé en ce que le groupe de pulvérisation (36; 81) est déplaçable au moyen d'un entraînement qui est disposé de préférence à l'extérieur de l'espace intérieur de la machine.

4. Dispositif selon l'une des revendications 1 à 3, caractérisé en ce que le groupe de pulvérisations (36; 81) est disposé en partie supérieure dans l'espace intérieur machine.

5. Dispositif selon l'une des revendications 1 à 4, caractérisé par au moins un dispositif de pulvérisation supplémentaire, de préférence une tête de pulvérisation sphérique (41) et/ou au moins un tube de pulvérisation (38; 39).

6. Dispositif selon l'une des revendications 1 à 5, caractérisé par un dispositif de commande qui commande le déroulement du nettoyage intérieur, en faisant appel à plusieurs passes opératoires.
